Europäisches Patentamt

European Patent Office

Office européen des brevets

(11) Numéro de publication: **0 298 872 B1**

# FASCICULE DE BREVET EUROPEEN

(45) Date de publication de fascicule du brevet: **17.06.92** (51) Int. Cl.⁵: **G01N 1/18**

(21) Numéro de dépôt: **88401783.1**

(22) Date de dépôt: **08.07.88**

(54) **Procédé et dispositif de répartition d'un volume primaire de fluide en un nombre déterminé de volumes secondaires présentant une relation prédéfinie entre eux.**

(30) Priorité: **10.07.87 FR 8709891**

(43) Date de publication de la demande:
**11.01.89 Bulletin 89/02**

(45) Mention de la délivrance du brevet:
**17.06.92 Bulletin 92/25**

(84) Etats contractants désignés:
**AT BE CH DE ES FR GB GR IT LI LU NL SE**

(56) Documents cités:
**DE-B- 1 034 886**
**FR-A- 2 157 643**
**FR-A- 2 463 407**
**FR-U- 2 372 578**

(73) Titulaire: **BERTIN & CIE**
**Zone Industrielle Boîte postale 3**
**F-78373 Plaisir Cédex(FR)**

(72) Inventeur: **Cohen, Daniel**
**13 rue Censier**
**F-75005 Paris(FR)**
Inventeur: **Le Gall, Yves**
**20 Avenue Dode de la Brunerie**
**F-75016 Paris(FR)**
Inventeur: **Dausset, Jean**
**9 rue de Villersexel**
**F-75007 Paris(FR)**
Inventeur: **Millasseau, Philippe**
**8 rue du Maréchal Maison**
**F-93800 Epinay/Seine(FR)**
Inventeur: **Le Gall, Isabelle**
**139 rue des Pyrénées**
**F-75020 Paris(FR)**

(74) Mandataire: **Ramey, Daniel et al**
**Cabinet Ores 6 Avenue de Messine**
**F-75008 Paris(FR)**

## Description

L'invention concerne essentiellement un procédé et un dispositif de répartition d'un volume primaire d'un fluide, en particulier d'un liquide, en un nombre déterminé de volumes secondaires présentant une relation prédéfinie entre eux.

Il est bien connu que, pour répartir des fluides en volumes prédéfinis, on peut utiliser différents procédés dont les plus courants sont entièrement mécaniques et font appel à des volumes déterminés par des enceintes à parois fixes ou déformables. Des enceintes à parois fixes sont constituées par des cellules de mesure, tandis que des enceintes à parois mobiles sont constituées par des seringues, des capsulismes, des pompes péristaltiques, des chasses d'eau.

D'autres procédés mettent en oeuvre des systèmes de répartition, utilisant d'autres propriétés que les propriétés mécaniques des enceintes, comme l'interruption à des temps égaux de flux d'un fluide se déplaçant à vitesse constante dans une section constante, ou l'interruption à des temps en relation avec la vitesse et la section. On peut citer par exemple un système de dosage utilisant des vannes commandées par un système générateur de temps agissant sur un flux de liquide s'écoulant à débit constant.

Tous ces systèmes présentent des inconvénients majeurs dus à leur nature :

- Il peut se produire des erreurs de mesure dues à des déformations accidentelles des parois, une usure des parois mobiles, des jeux et des retards dans les dispositifs de commande, des défauts d'étanchéité, des incidents mécaniques bloquant le système.
- Il peut également se produire des erreurs sur la mesure du temps et sur la vitesse d'écoulement du fluide, qui est fonction entre autres de ses propriétés physiques, par exemple de sa viscosité qui varie avec la température.

Ces erreurs pourraient bien entendu être compensées dans une certaine mesure, par une plus grande sophistication des procédés de contrôle et de commande, mais aux dépens de la simplicité, avec une augmentation concomitante des coûts et des risques de mauvais fonctionnement.

On connaît, par le document FR-A-2 157 643, un appareil de fractionnement de liquide, comprenant une chambre dans laquelle débouchent un conduit d'entrée et plusieurs conduits de sortie reliés à une pompe doseuse, cette chambre ayant un volume minimal qui est plus petit que la plus petite partie d'un liquide non homogène à fractionner. Les conduits de sortie partent de cette chambre sous des angles égaux par rapport à la verticale et sont horizontaux dans le mode de réalisation décrit et représenté. Cet agencement n'est pas favorable à un bon écoulement du liquide dans les conduits de sortie, et ne permet un fractionnement uniforme du liquide entre les conduits de sortie que si la pompe doseuse reliée à ces conduits de sortie a une action uniforme sur tous ces conduits de sortie, ce qui ne semble pas facile à réaliser en pratique.

L'invention a pour but de résoudre le problème consistant à éliminer ou réduire au maximum les inconvénients mentionnés ci-dessus, dans un procédé et un dispositif de répartition d'un volume primaire de fluide en volumes secondaires selon une relation prédéfinie.

l'invention a également pour but un procédé et un dispositif de répartition, n'utilisant que les propriétés physiques et géométriques des corps en contact, de telle sorte que l'exactitude de la répartition soit totalement indépendante des conditions de fonctionnement, comme par exemple de la viscosité du fluide à répartir, sa température ou celle de son environnement, etc...

L'invention a encore pour but un procédé et un dispositif de répartition de fluide, ne comprenant que des éléments statiques, évitant ainsi des inconvénients dus à l'usure mécanique.

L'invention a également pour but un procédé et un dispositif de ce type, permettant la répartition d'un fluide au moyen d'une seule et unique enceinte, de façon à éliminer les erreurs dues à la multiplicité.

L'invention propose donc, à cet effet, un procédé de répartition d'un volume primaire de fluide en un nombre déterminé de volumes secondaires présentant une relation prédéfinie entre eux, par amenée du volume primaire de fluide dans une enceinte comprenant des orifices d'évacuation de fluide en nombre correspondant au nombre des volumes secondaires désirés, caractérisé en ce que lesdits orifices d'évacuation sont formés dans une surface horizontale de l'enceinte, cette surface horizontale ayant une aire sensiblement égale à la somme des aires desdits orifices, et en ce que le procédé consiste à interdire et à permettre sélectivement l'écoulement du fluide dans les orifices d'évacuation de façon simultanée pour tous ces orifices, et à assurer une répartition uniforme du fluide dans les orifices d'évacuation, d'abord par formation d'une surface libre du fluide parallèle à ladite surface horizontale de l'enceinte comprenant les orifices d'évacuation, puis par fractionnement simultané de cette surface libre par les orifices d'évacuation.

Ce procédé permet, quand on interdit l'écoulement du fluide dans les orifices d'évacuation, de former une surface libre du fluide au-dessus de la surface horizontale de l'enceinte comprenant les orifices d'évacuation. Quand, ensuite, on autorise de façon simultanée l'écoulement du fluide par les orifices d'évacuation, la surface libre de fluide se rapproche progressivement des orifices d'évacuation et est fractionnée simultanément par tous ces orifices. Il en résulte une interruption de l'alimentation en fluide de ces orifices. Comme l'aire de la surface horizontale précitée de l'enceinte est sensiblement égale à la somme des aires des orifices d'évacuation, on évite la présence d'une quantité plus ou moins déterminée de fluide résiduel sur le fond de l'enceinte.

Avantageusement, l'invention prévoit également d'assurer l'écoulement complet du fluide à répartir par amenée dans l'enceinte d'un fluide propulseur non miscible avec le fluide précité.

Pour améliorer encore la précision de la répartition, l'invention prévoit de réduire ladite surface libre du fluide au moyen d'une surface de guidage disposée dans l'enceinte à proximité des orifices d'évacuation.

Ainsi, l'aire de la surface libre du fluide peut être réduite progressivement jusqu'à devenir sensiblement égale à la somme des aires des orifices d'évacuation.

Enfin, pour faire varier le nombre des volumes secondaires précités, l'invention prévoit également d'en obturer sélectivement certains.

L'invention propose également un dispositif de répartition d'un volume primaire de fluide en un nombre prédéterminé de volumes secondaires présentant une relation prédéfinie entre eux, comprenant une enceinte fermée délimitant une chambre de réception du volume primaire de fluide et comprenant un orifice d'admission et des orifices d'évacuation du fluide en nombre correspondant à celui des volumes secondaires désirés de fluide, caractérisé en ce que ces orifices d'évacuation sont formés dans une face horizontale inférieure de ladite chambre et ont une aire totale sensiblement égale à celle de cette face horizontale de la chambre, et en ce que le dispositif comprend des moyens interdisant et permettant sélectivement l'écoulement du fluide par les orifices d'évacuation, de façon à former d'abord une surface libre de fluide parallèlement aux orifices d'évacuation, puis à assurer ensuite un fractionnement simultané de cette surface libre par ces orifices.

Un des avantages principaux du dispositif selon l'invention est d'être d'une conception et d'une réalisation particulièrement simples, tout en étant extrêmement précis et indépendant (au moins dans une certaine mesure) des conditions de fonctionnement, telles que la température, la pression, la viscosité du fluide, etc...

Les moyens précités qui permettent et interdisent sélectivement l'écoulement du fluide par les orifices d'évacuation comprennent, dans un mode de réalisation de l'invention, des robinets, vannes, clapets, volets ou analogues, montés dans des conduits d'évacuation reliés aux orifices d'évacuation.

En variante, ces moyens peuvent être constitués par des tubes en U, formants conduits d'évacuation du fluide et reliés aux orifices d'évacuation.

Le dispositif comprend également des moyens d'introduction dans l'enceinte d'un fluide propulseur, non miscible avec le fluide à répartir.

Selon une autre caractéristique de l'invention, l'enceinte contient une surface géométrique de pré-répartition de fluide, commençant au voisinage de l'orifice d'admission et se terminant au voisinage des orifices d'évacuation. Dans un mode préféré de réalisation de l'invention, cette surface de pré-répartition est de forme conique, son sommet étant orienté vers l'orifice d'admission de fluide, tandis que sa base est voisine des orifices d'évacuation.

De préférence, un moyen de nappage est associé à l'orifice d'admission et comprend une surface parallèle au sommet de la surface de pré-répartition, et est disposé au voisinage immédiat de celle-ci.

Enfin, les orifices d'évacuation peuvent être formés au fond de gorges ou d'alvéoles de confinement de fluide, qui sont propres à être remplis totalement par le fluide à répartir, ces gorges et/ou alvéoles étant à section décroissante en direction des orifices d'évacuation.

L'invention sera mieux comprise, et d'autres buts, caractéristiques et avantages de celle-ci apparaîtront plus clairement à la lecture de la description qui suit, faite à titre d'exemple en référence aux dessins annexés, dans lesquels :
- la figure 1 est une vue schématique en coupe axiale verticale d'un dispositif selon l'invention;
- la figure 2 représente schématiquement un deuxième mode de réalisation de l'invention;
- la figure 3 représente une variante de réalisation de ce dispositif;
- la figure 4 est une vue partielle en coupe axiale verticale d'une variante de réalisation;
- la figure 5 est une vue schématique en coupe axiale verticale d'une autre variante de réalisation;
- la figure 6 représente, de façon partielle, encore un autre mode de réalisation;
- la figure 7 est une vue en coupe, plus détaillée, d'une réalisation pratique d'un dispositif selon l'invention;
- la figure 8 est une vue partielle schématique, en coupe axiale, d'une autre variante de réalisation de l'invention.

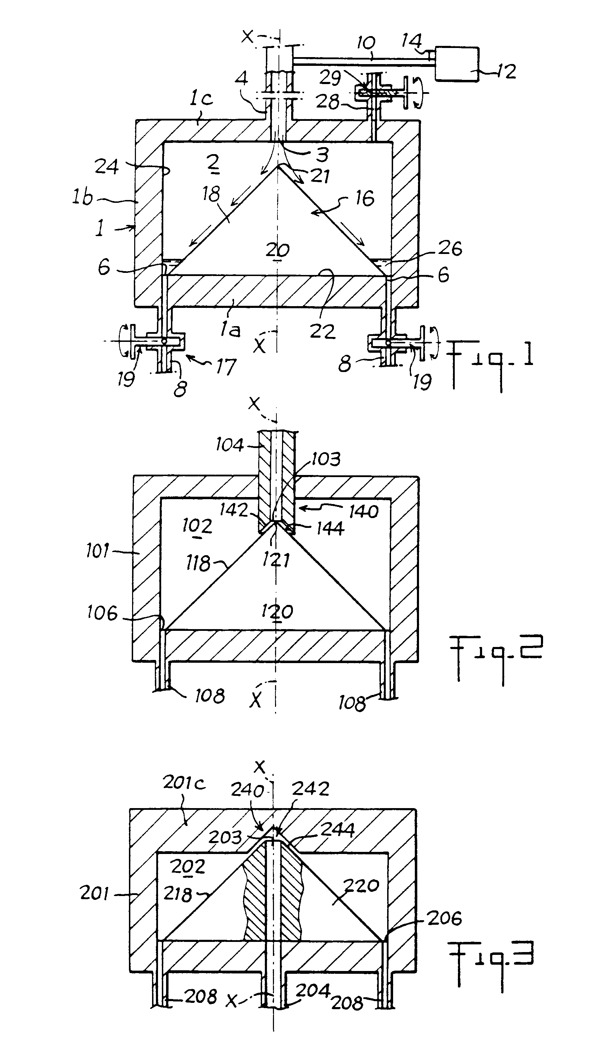

En figure 1, on a représenté un dispositif selon l'invention, assurant la répartition d'un volume primaire d'un fluide en un nombre déterminé de volumes secondaires présentant une relation prédéfinie entre eux.

Ce dispositif comprend une enceinte fermée et désignée par la référence 1, délimitant intérieurement une chambre 2 de pré-répartition de fluide, comprenant un orifice 3 d'admission du fluide, se prolongeant par un canal 4 d'admission, et des orifices 6 d'évacuation du fluide, en nombre correspondant au nombre de volumes secondaires désirés, et reliés à des canaux 8 d'évacuation correspondants.

La chambre 2 de pré-répartition a un axe de symétrie symbolisé par la ligne X-X et les orifices 6 d'évacuation sont répartis symétriquement par rapport à cet axe, et sont disposés dans un même plan horizontal. Des moyens 16 de guidage du fluide sont également prévus entre l'orifice d'admission 3 et les orifices d'évacuation 6, et des moyens 17 sont associés aux orifices 6 ou aux canaux 8 pour assurer leur alimentation simultanée et uniforme en fluide.

Le dispositif selon l'invention comprend également, de préférence, des moyens d'introduction d'un fluide propulseur non miscible avec le fluide à répartir, dans la chambre 2 à partir d'une réserve de fluide propulseur 12, reliée par un conduit 10 au canal d'admission 4, en amont de l'orifice d'admission 3. Une vanne 14 à commande manuelle ou automatique permet l'ouverture et l'obturation du conduit 10. Le fluide propulseur peut donc être introduit sous pression dans la chambre 2 pour obliger le fluide à répartir à s'écouler complètement par les orifices d'évacuation 6 et les conduits 8.

On notera que, de préférence, la chambre de pré-répartition 2 est réalisée de façon à ne contenir aucune surface horizontale de guidage du fluide, à l'exception des surfaces des orifices d'évacuation 6.

Les moyens 16 de guidage comprennent une surface d'écoulement 18 ayant un axe de symétrie qui coïncide avec l'axe X-X de la chambre 2 et qui est par exemple de forme conique en s'étendant du voisinage de l'orifice d'admission 3 jusqu'aux orifices d'évacuation 6, pour amener le fluide à s'écouler en direction de ces orifices d'évacuation.

Le sommet 21 du cône 20 définissant la surface d'écoulement 18 se trouve sur l'axe de symétrie X-X de la chambre 2, et la base 22 de ce cône repose sur ou fait partie de la paroi formant le fond 1a de la chambre 2, de sorte que le fluide à répartir, introduit par l'orifice 3, arrive sur le sommet 21 du cône 1 et s'écoule sur la surface 18 jusqu'à aboutir dans les orifices d'évacuation 6. Ces derniers sont formés dans le fond 1a de l'enceinte 1 en étant sensiblement tangents à la base du cône 20, à l'extérieur de celle-ci, comme représenté en figure 1.

Les moyens précités 17 comprennent des robinets 19 montés sur les conduits d'évacuation 8 et agencés pour pouvoir être commandés simultanément en ouverture et en fermeture. A la place de robinets, on peut également utiliser des moyens équivalents tels que des clapets, des volets, des vannes, etc ...

La paroi supérieure 1c de l'enceinte 1 comprend un trou d'évent 28 associé à un moyen de fermeture tel qu'un robinet 29 ou tout autre moyen équivalent, tel qu'un clapet, un volet, une vanne, etc..

Les robinets 19 et 29 ou les moyens équivalents sont commandés automatiquement, pour permettre un fonctionnement particulièrement simple du dispositif de répartition selon l'invention.

Ce fonctionnement est le suivant:

L'enceinte 1 étant vide de fluide à répartir, les robinets 19 des conduits d'évacuation 8 sont fermés et le robinet 29 du trou d'évent 28 est ouvert. Un volume primaire de fluide à répartir est introduit dans la chambre 2 par le canal d'admission 4 et l'orifice 3, et s'écoule sur le sommet 21 du cône 20, en se répartissant uniformément sur la surface d'écoulement 18, en direction des orifices d'évacuation 6. Les robinets 19 étant fermés, le fluide s'accumule au fond de la chambre 2, entre la surface conique 18 et la face interne 24 de la paroi latérale 1b de l'enceinte, pour former une nappe 26 de fluide au-dessus des orifices d'évacuation 6. Cette formation d'une nappe 26 correspond à une répartition parfaitement uniforme du fluide au-dessus des orifices 6.

Dès qu'une nappe 26 minimale s'est formée au-dessus de ces orifices, on peut ouvrir simultanément tous les robinets 19 des conduits d'évacuation 8, pour permettre un écoulement du fluide dans tous les conduits 8.

Pour assurer l'écoulement complet du fluide à répartir, un fluide propulseur sous pression est amené dans l'enceinte 2 depuis la source 12 par la vanne 14, le conduit 10 et l'orifice d'admission 3, pour exercer une pression sur la fluide à répartir et l'obliger à passer par les orifices d'évacuation 6. On peut également utiliser le fluide propulseur pour pousser le volume primaire de fluide à répartir dans le conduit d'admission 4, vers l'orifice 3.

On comprend que, même si le fluide à répartir est un fluide non mouillant qui s'écoule de façon non uniforme sur la surface conique 18, la formation de la nappe 26 de fluide dans la chambre 2 aboutit obligatoirement à une répartition uniforme au-dessus des orifices d'évacuation 6.

On comprend également que l'alimentation de la chambre 2 en fluide à répartir peut se poursuivre après ouverture des robinets 19, pendant l'évacuation du fluide par les conduits 8 dès lors qu'une quantité minimale de fluide forme une nappe continue 26 au-dessus des orifices d'évacuation 6.

La répartition d'un volume primaire de fluide en volumes secondaires est extrêmement précise, le début de l'écoulement du fluide dans les divers canaux d'évacuation 8 étant synchronisé par les robinets 19, et la fin de cet écoulement étant déterminée par le fractionnement de la surface libre de la nappe 26 de fluide par les orifices d'évacuation 6, qui sont formés dans un plan horizontal parallèle à cette surface libre.

On comprend également qu'il est avantageux que la surface horizontale de la chambre 2, dans laquelle sont formés les orifices d'évacuation 6, ait une aire sensiblement égale à la somme des aires des orifices d'évacuation 6, pour réduire à un minimum la quantité résiduelle de fluide susceptible de rester au fond de la chambre 2.

Le fonctionnement du dispositif selon l'invention est ainsi indépendant des caractéristiques physiques du fluide à répartir, telles que sa température, sa viscosité, sa tension superficielle ou capacité de mouillage.

On peut également faire varier la longueur ou la section des conduits d'évacuation 8 et la section des orifices d'évacuation 6 associés, pour faire varier la proportion relative des volumes secondaires.

En outre, il n'y a pas de limitation dans la quantité de fluide à répartir.

Le dispositif de répartition selon l'invention peut donc être incorporé dans tout appareil de dosage par répartition. Le fluide à répartir peut être un liquide, ou un gaz comme on le verra ci-après.

La répartition peut concerner des fluides biologiques pour tout traitement, notamment pour analyse, pour une réaction quelconque, notamment chimique, ou pour des lavages.

Le dispositif selon l'invention peut encore être utilisé pour l'introduction d'additifs ou de dopes dans des combustibles tels que l'essence, le fuel ou le gasoil.

Ce dispositif peut également être utilisé pour l'injection de sirop concentré dans des boissons, pour le remplissage d'ampoules, etc ..

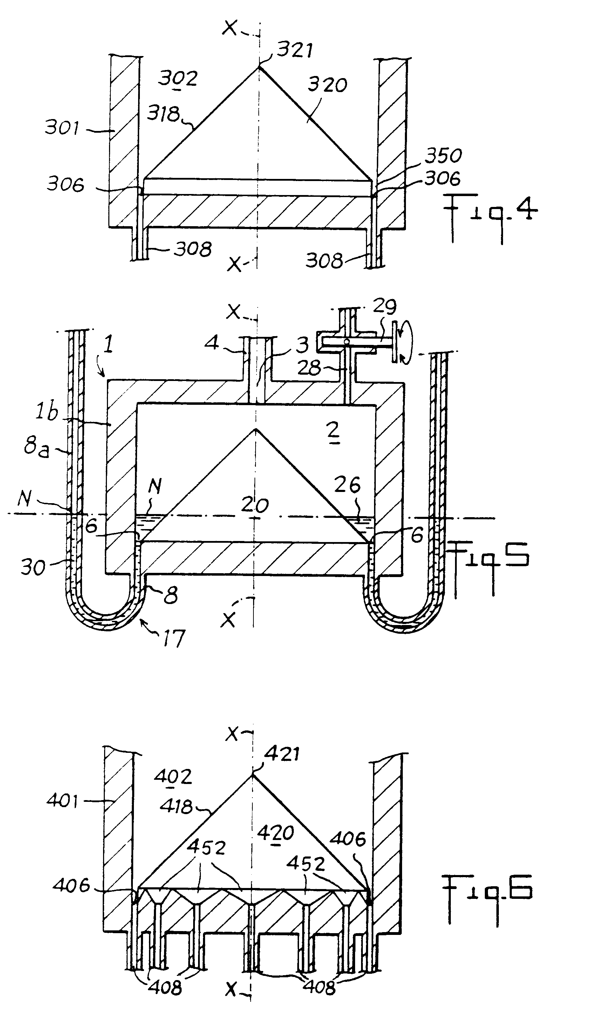

En figure 2, on a représenté une variante de réalisation de l'invention, et on a utilisé les mêmes numéros de référence qu'en figure 1, augmentés de 100 pour désigner des pièces identiques. Dans cette variante de réalisation, ou a prévu un dispositif de nappage 140 du fluide à répartir sur la surface d'écoulement 118. Ce dispositif 140 est formé par une contre-surface conique 142 disposée à faible distance du sommet 121 du cône 120, de façon à définir une gorge conique 144 entourant le sommet du cône 120 et obligeant le fluide à se répartir uniformément sur la surface 118.

Lorsque le fluide à répartir est un liquide, l'écoulement de ce liquide sur la surface 118 a lieu sans éclaboussures.

En figure 3, on a représenté une autre variante de réalisation d'un dispositif selon l'invention, dans lequel les éléments identiques ou semblables à ceux des figures 1 et 2 sont désignés par des références qui ont encore été augmentées de 100.

Dans cette variante de réalisation, l'orifice d'admission 203 du fluide à répartir est réalisé dans la masse du cône 220, ainsi qu'une partie du canal d'admission 204. Le dispositif de nappage 240 est de préférence constitué par un évidement conique 242 de la paroi de sommet 201c de l'enceinte 201, en ménageant ainsi un faible volume 244 au voisinage immédiat du cône 220. On obtient les mêmes avantages qu'avec la forme de réalisation représentée en figure 2.

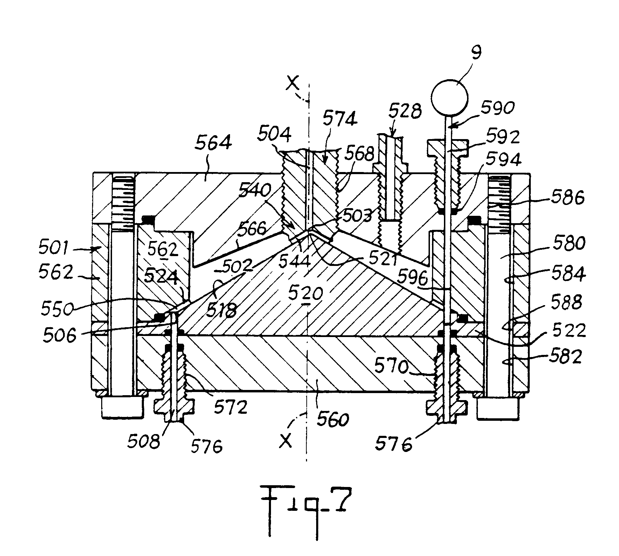

En figure 4, on a représenté une autre forme de réalisation de l'invention, dans laquelle les éléments identiques ou similaires à ceux des figures précédentes sont désignés par les mêmes références encore augmentées de 100.

Dans cette autre forme de réalisation, la chambre 302 comprend une gorge annulaire 350 de confinement de fluide, formée au-dessus des orifices d'évacuation 306, autour de la base de cône 320. La largeur de la partie inférieure de cette gorge 350 est égale au diamètre des orifices d'évacuation 306. La surface libre résiduelle du fluide à répartir contenu dans cette gorge est ainsi sensiblement égale à la surface totale des orifices d'évacuation 306.

En figure 5, on a représenté un autre mode de réalisation d'un dispositif de répartition selon la présente invention, qui constitue une variante de réalisation du dispositif de la figure 1, et dans laquelle on a désigné par les mêmes références qu'en figure 1 les pièces ou éléments identiques à ceux du dispositif de cette figure 1.

Dans cette variante de réalisation, les moyens 17 qui assuraient dans le dispositif de la figure 1 la synchronisation de l'écoulement par les orifices d'évacuation 6, ont été remplacés par un système de tubes en U 30, formant une inflexion vers le haut des conduits d'évacuation 8 associés aux orifices d'évacuation 6.

La branche externe ou supérieure 8a de chaque conduit d'évacuation 8 se prolonge vers le haut jusqu'à un niveau supérieur à celui de la chambre 2. De cette façon, lorsqu'une nappe 26 de liquide à répartir est formée dans la chambre 2 audessus des orifices d'évacuation 6, elle se trouve à un niveau N que l'on retrouve dans les branches 8a des conduits d'évacuation 8. On obtient donc, de façon très simple, un moyen empêchant un écoulement non contrôlé de liquide par les orifices 6 et conduits 8.

Dès qu'un volume primaire de liquide à répartir a été introduit dans la chambre 2 et forme une nappe 26 recouvrant les orifices d'évacuation 6, on ferme le trou d'évent 28 au moyen du robinet 29, et on amène un fluide propulseur sous pression dans la chambre 2 pour provoquer l'écoulement du liquide à répartir par les orifices d'évacuation 6 et les conduits 8. La surface libre du liquide descend dans la chambre 2 jusqu'à ce qu'elle soit fractionnée uniformément par les orifices d'évacuation 6.

En variante, on peut utiliser des orifices d'évacuation dont les parois sont réalisées en un matériau non mouillable par le fluide à répartir, de telle sorte que le volume primaire de fluide amené dans la chambre 2 forme alors une nappe 26 au-dessus des orifices d'évacuation jusqu'à ce que la pression hydrostatique soit suffisante pour provoquer un écoulement.

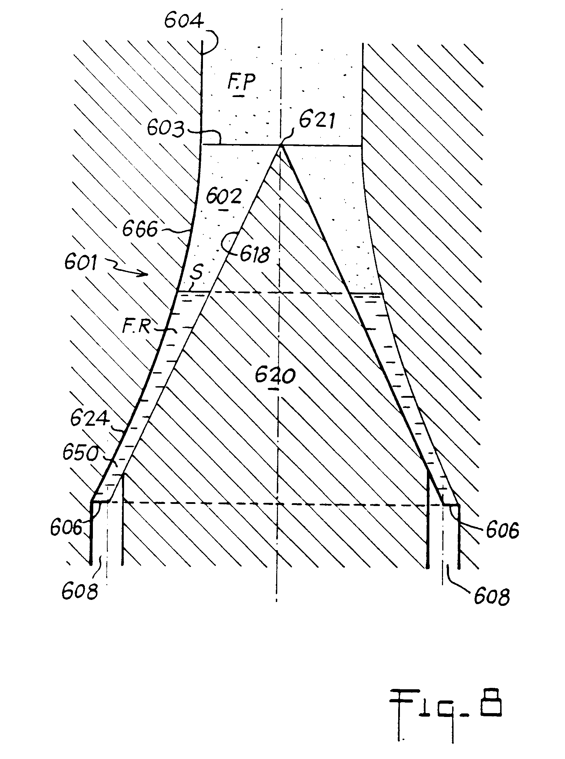

En figure 6, on a représenté un autre mode de réalisation d'un dispositif selon l'invention, constituant une variante du dispositif représenté en figure 4, et dans laquelle les pièces ou éléments identiques sont désignés par les mêmes références qu'en figure 4, encore augmentées de 100.

Dans cette variante de réalisation, le fond de la chambre 402 comprend des alvéoles de confinement 452 dont les dimensions sont telles que la fluide à répartir doit les remplir totalement, en raison de ses propriétés physiques. Ces alvéoles 452 ont une section décroissante vers le bas et aboutissent chacun à un orifice d'évacuation 406. De préférence, les bases ou sections les plus larges des alvéoles 452 sont jointives, de sorte que le fond de l'enceinte 401 ne présente sensiblement aucune surface horizontale, ce qui permet d'éliminer complètement tout volume résiduel de fluide dans la chambre 402.

On a représenté en figure 7 un exemple détaillé de réalisation d'un dispositif selon l'invention. Dans cette figure, les pièces ou éléments ayant les mêmes fonctions que dans les figures précédentes sont désignés par les mêmes références augmentées encore de 100.

L'enceinte 501 est formée par l'assemblage de plusieurs pièces distinctes, dont le nombre et la symétrie axiale facilitent la réalisation mécanique :

- Un élément 560 en forme de disque, destiné à constituer le fond de l'enceinte 501 et sur lequel repose un cône 520 dont la grande base peut être prolongée horizontalement par un rebord annulaire plan 522,
- une bague annulaire 562 formant la paroi latérale verticale 524 de la chambre 502 et comportant en partie inférieure une surface inclinée 524a tronconique définissant une gorge ou des alvéoles de confinement 550 avec la surface inclinée 518 du cône 520,
- un disque supérieur 564, formant la paroi de sommet de l'enceinte et comprenant des surfaces inclinées tronconiques 566 au-dessus du cône 520, afin de réduire le volume de la chambre 502 dans le cas où on utilise un fluide propulseur coûteux.

Des passages traversants 568, 570, 572 sont formés dans les disques 560 et 564 pour définir l'orifice d'admission 503 et les orifices d'évacuation 506, ainsi que le canal d'admission 504 et les canaux d'évacuation 508, notamment dans des pièces démontables intermédiaires telles que 574 et 576. La fixation des disques 560 et 564, de la bague annulaire 562 et du cône 520 peut être réalisée au moyen de tiges filetées 580 passant dans des orifices 582, 584, 586, 588 formés respectivement dans le disque 560, la bague 562, le disque 564 et dans le rebord 522 du cône 520.

Des moyens d'obturation rétractables 590, comprenant des tiges 592 passant dans des alésages 594, 596 respectivement du disque supérieur 564 et de la bague annulaire 562, sont prévus pour venir obturer les orifices d'évacuation 506 et une partie des canaux d'évacuation 508.

L'évent 528 est formé par une pièce dont la base est vissée dans un trou fileté du disque supérieur 564.

Le fonctionnement est identique à celui des modes de réalisation précédents, avec la possibilité d'obturer certains des conduits d'évacuation 508, pour faire varier le nombre de volumes secondaires désirés.

On a représenté en figure 8 un autre mode de réalisation du dispositif de répartition selon l'invention, dans laquelle les pièces ou éléments remplissant les mêmes fonctions que dans la figure 7 sont désignés par les mêmes références augmentées encore de 100.

Dans cet exemple, la chambre de pré-répartition 602 est formée entre la paroi d'écoulement 618 d'un cône 620 à sommet 621 qui se prolonge vers le haut jusqu'à l'orifice d'admission 603 terminant le conduit 604, et une paroi de révolution 666, à profil incurvé convexe, tel que les sections transversales de la chambre 602 aient une surface sensiblement égale à celle du conduit d'admission 604 et de l'orifice d'admission 603. Cette paroi incurvée 666 se raccorde directement, en partie supérieure, au conduit d'admission 604 et, en partie inférieure, aux orifices d'évacuation 606 qui sont formés dans un même plan horizontal et qui sont associés aux conduits d'évacuation 608. Entre la base du cône 620 et la partie inférieure de la paroi incurvée 666, on peut également définir des alvéoles 650 de confinement de fluide, comme dans les modes de réalisation des figures 6 et 7.

Dans la forme de réalisation de la figure 8, il suffit de propulser le volume de fluide à répartir par le conduit d'admission 604 au moyen du fluide propulseur, pour obtenir une répartition régulière en volumes secondaires désirés, correspondant aux orifices d'évacuation 606 et aux canaux 608. L'exactitude de la répartition résulte du fait qu'il existe une surface unique S de séparation entre le fluide propulseur désigné par les lettres FP et le fluide à répartir désigné par les lettres FR, cette surface de séparation S s'étendant sur toute la section transversale de la chambre 602 et se comportant comme un piston sous l'effet de la pression du fluide propulseur.

Le mode de réalisation de la figure 8 peut fonctionner dans toutes les positions, avec un fluide à répartir qui est liquide ou gazeux.

Il faut bien entendu que la pression du fluide propulseur soit déterminée de façon à ce qu'il ne se crée pas de rupture de la surface unique de séparation S avec le fluide à répartir. La valeur de cette pression dépend des caractéristiques physiques du fluide propulseur et du fluide à répartir, et est facilement déterminable par l'homme du métier.

Dans sa forme générale, le dispositif de répartition peut être utilisé dans le cas où le fluide à répartir est un gaz, en étant simplement retourné, les orifices d'évacuation se trouvant alors en partie supérieure de la chambre et l'orifice d'admission se trouvant en partie inférieure, ainsi que le trou d'évent éventuel. Dans cette disposition, le fluide propulseur sera de préférence un liquide.

Au départ, l'enceinte et le conduit d'évacuation seront remplis par un liquide dans lequel le gaz à répartir est insoluble et qui présente une tension de vapeur suffisante pour ne pas polluer le gaz.

Quand le gaz à répartir est introduit dans l'enceinte, le trou d'évent (qui est alors un orifice de vidange) est ouvert pour permettre l'évacuation du liquide remplacé progressivement par le gaz qui vient s'accumuler sous les orifices d'évacuation. Quand un volume de gaz suffisant est ainsi formé, l'orifice de vidange est fermé et, sous la pression du liquide propulseur, le gaz s'écoule par les conduits d'évacuation, en poussant le liquide qui peut s'y trouver, jusqu'à ce que le liquide propulseur ait à nouveau rempli l'enceinte et les conduits d'évacuation.

**Revendications**

1. Procédé de répartition d'un volume primaire de fluide en un nombre déterminé de volumes secondaires présentant une relation prédéfinie entre eux, par amenée du volume primaire de fluide dans une enceinte (1, 101, 201, 301, 401, 501, 601) comprenant des orifices (6, 106, 206, 306, 406, 506, 606) d'évacuation de fluide en nombre correspondant au nombre des volumes secondaires désirés, caractérisé en ce que ces orifices d'évacuation sont formés dans une surface horizontale de l'enceinte, cette surface horizontale ayant une aire sensiblement égale à la somme des aires desdits orifices d'évacuation, et en ce que le procédé consiste à interdire et permettre sélectivement l'écoulement du fluide dans les orifices d'évacuation de façon simultanée pour tous ces orifices, et à assurer une répartition uniforme du fluide dans les orifices d'évacuation, d'abord par formation d'une surface libre du fluide parallèle à ladite surface horizontale de l'enceinte comprenant les orifices d'évacuation, puis par fractionnement simultané de cette surface libre par les orifices d'évacuation.

2. Procédé selon la revendication 1, caractérisé en ce qu'il consiste à assurer l'écoulement complet du fluide à répartir, par amenée dans l'enceinte d'un fluide propulseur non miscible avec le fluide à répartir.

3. Procédé selon la revendication 1 ou 2, caractérisé en ce qu'il consiste à réduire l'aire de la surface libre du fluide au moyen d'une surface de guidage (18, 118, 218, 318, 418, 518, 618) disposée dans l'enceinte à proximité des orifices d'évacuation.

4. Procédé selon l'une des revendications précédentes, caractérisé en ce qu'il consiste à obturer sélectivement certains des orifices d'évacuation pour faire varier le nombre de volumes secondaires.

5. Dispositif de répartition d'un volume primaire de fluide en un nombre prédéterminé de volumes secondaires présentant une relation prédéfinie entre eux, comprenant une enceinte fermée, (1, 101, 201, 301, 401, 501, 601) délimitant une chambre (2, 102, 202, 302, 402, 502, 602) de réception du volume primaire de fluide et comprenant un orifice d'admission (3, 103, 203, 303, 403, 503, 603) et des orifices d'évacuation (6, 106, 206, 306, 406, 506, 606) du fluide en nombre correspondant à celui des volumes secondaires désirés de fluide, caractérisé en ce que ces orifices d'évacuation sont formés dans une face horizontale de ladite chambre et ont une aire totale sensiblement égale à celle de cette face horizontale de la chambre, et en ce que le dispositif comprend des moyens (17, 19, 30) interdisant et permettant sélectivement l'écoulement du fluide par les orifices d'évacuation, de façon à former d'abord une surface libre de fluide parallèlement aux orifices d'évacuation, puis à assurer ensuite un fractionnement simultané de cette surface libre par ces orifices.

6. Dispositif selon la revendication 5, caractérisé en ce que les moyens précités comprennent des robinets (19), des vannes, clapets ou analogues, montés dans des conduits d'évacuation (8) reliés aux orifices d'évacuation précités.

7. Dispositif selon la revendication 5, caractérisé en ce que les moyens précités comprennent des tubes en U (30), formant conduits d'évacuation du fluide et reliés aux orifices d'évacuation précités.

8. Dispositif selon l'une des revendications 5 à 7, caractérisé en ce qu'il comprend des moyens (10, 12, 14) d'introduction dans l'enceinte d'un fluide propulseur non miscible avec le fluide à répartir.

9. Dispositif selon l'une des revendications 5 à 8, caractérisé en ce que l'enceinte comprend une surface géométrique (18, 118, 218, 318, 418, 518, 618) de prérépartition de fluide, commençant au voisinage de l'orifice d'admission et se terminant au voisinage des orifices d'évacuation.

10. Dispositif selon la revendication 9, caractérisé en ce que cette surface de prérépartition est de forme sensiblement conique, son sommet étant orienté vers l'orifice d'admission de fluide, tandis que sa base est voisine des orifices d'évacuation.

11. Dispositif selon la revendication 9 ou 10, caractérisé en ce qu'il comprend un moyen (142, 242) de nappage, associé à l'orifice d'admission et comprenant une surface parallèle au sommet de la surface de prérépartition et disposée au voisinage immédiat de celle-ci.

12. Dispositif selon l'une des revendications 5 à 11, caractérisé en ce que les orifices d'évacuation sont formés au fond de gorges (350, 550) ou d'alvéoles (450) de confinement de fluide, propres à être remplis totalement par le fluide à répartir.

13. Dispositif selon la revendication 12, caractérisé en ce que les gorges et/ou alvéoles précités sont à section décroissante en direction des orifices d'évacuation.

14. Dispositif selon l'une des revendications 5 à 13, caractérisé en ce qu'il comprend un trou d'évent (28, 528) débouchant dans ladite chambre, et des moyens (29) d'obturation de ce trou.

15. Dispositif selon l'une des revendications 5 à 14, caractérisé en ce que l'enceinte (501) est formée par :
- un élément (560) en forme de disque, formant le fond de l'enceinte et sur laquelle est posé un élément (520) à surface conique d'écoulement de fluide,
- une bague annulaire (562) formant la paroi latérale de l'enceinte et comportant une surface interne tronconique définissant un volume de confinement (550) avec la surface conique précitée (518),
- un élément supérieur (564) en forme de disque, formant le sommet de l'enceinte,
- et des moyens (580) de fixation, tels que des boulons traversant les éléments précités pour les assembler de façon étanche.

16. Dispositif selon la revendication 5, caractérisé en ce que la chambre (602) de réception du volume primaire de fluide est délimitée entre une surface interne conique (618) et une paroi (666) de révolution à profil incurvé convexe, raccordée directement à l'orifice d'admission (603) et d'autre part aux orifices d'évacuation (606), ladite chambre ayant une section transversale d'aire sensiblement constante, égale à celle de l'orifice d'admission.

**Claims**

1. A method of apportioning a primary volume of fluid into a determined number of secondary volumes having a predefined mutual relationship, by bringing the primary volume of fluid into an enclosure (1, 101, 201, 301, 401, 501, 601) including the same number of fluid evacuation orifices (6, 106, 206, 306, 406, 506, 606) as the desired number of secondary volumes, characterized in that these evacuation orifices are formed in an horizontal surface of the enclosure, this horizontal surface having an area substantially equal to the sum of the areas of said evacuation orifices, and the method consists in selectively preventing and allowing the fluid to flow through the evacuation orifices simultaneously for all of the orifices, and in ensuring that the fluid is uniformly apportioned between the evacuation orifices, first by forming a free fluid surface parallel to said enclosure horizontal surface including the evacuation orifices, and then by said free surface being simultaneously fractioned by the evacuation orifices.

2. A method according to claim 1, characterized in that it consists in ensuring that all of the fluid to be apportioned is caused to flow by bringing a propellant fluid into the enclosure, which propellant fluid is not miscible with the fluid to be apportioned.

3. A method according to claim 1 or 2, characterized in that it consists in reducing the area of the free surface of the fluid by means of a guide surface (18, 118, 218, 318, 418, 518, 618) disposed inside the enclosure in the proximity of the evacuation orifices.

4. A method according to any preceding claim, characterized in that it consists in selectively closing some of the evacuation orifices to vary the number of secondary volumes.

5. Apparatus for apportioning a primary volume of fluid into a predetermined number of secondary volumes having a predefined mutual relationship, the apparatus comprising a closed enclosure (1, 101, 201, 301, 401, 501, 601) delimiting a chamber (2, 102, 202, 302, 402, 502, 602) for receiving the primary volume of fluid and including an admission orifice (3, 103, 203, 303, 403, 503, 603) and fluid evacuation orifices (6, 106, 206, 306, 406, 506, 606), the number of evacuation orifices corresponding to the desired number of secondary volumes of fluid, characterized in that said evacuation orifices are formed in a horizontal face of said chamber and have a total area substantially equal to that of this horizontal face of the enclosure, and in that the apparatus comprises means (17, 19, 30) for selectively preventing and allowing the fluid to flow through the evacuation orifices and in order first to form a free fluid surface parallel to the evacuation orifices and then to ensure that said free surface is simultaneously fractioned by said orifices.

6. Apparatus according to claim 5, characterized in that said means comprise cocks (19), valves, or the like, mounted in evacuation ducts (8) connected to said evacuation orifices.

7. Apparatus according to claim 5, characterized in that the said means comprise U-tubes (30) forming fluid evacuation ducts and connected to said evacuation orifices.

8. A device according to any one of claims 5 to 7, characterized in that it includes means (10, 12, 14) for inserting a propellant fluid into the enclosure (1), said fluid not being miscible with the fluid to be apportioned.

9. Apparatus according to any one of claims 5 to 8, characterized in that the enclosure includes a geometrical fluid pre-apportioning surface (18, 118, 218, 318, 418, 518, 618) beginning in the vicinity of the admission orifice and terminating in the vicinity of the evacuation orifices.

10. Apparatus according to claim 9, characterized in that the pre-apportioning surface is substantially conical in shape, with its apex being oriented towards the fluid admission orifice, and with its base being in the vicinity of the evacuation orifices.

11. Apparatus according to claim 9 or 10, characterized in that it includes a spreader device (142, 242) associated with the admission orifice and comprising a surface parallel to the apex of the pre-apportioning surface and disposed in the immediate vicinity thereof.

12. Apparatus according to any one of claims 5 to 11, characterized in that the evacuation orifices are formed in the bottoms of fluid confinement grooves (350, 550) or recesses (450) suitable for being completely filled with the fluid to be apportioned.

13. Apparatus according to claim 12, characterized in that the cross-section of said grooves and/or recesses tapers towards the evacuation orifices.

14. Apparatus according to any one of claims 5 to 13, characterized in that it includes a vent hole (28, 528), opening out into said chamber, and means (29) for closing said hole.

15. Apparatus according to any one of claims 5 to 14, characterized in that the enclosure (501) is constituted by :
   a disk-shaped element (560) forming the bottom of the enclosure and having a conical surface fluid flow element (520) placed thereon;
   an annular ring (562) forming the side wall of the enclosure and including a frustoconical inside surface defining a confinement volume (550) in conjunction with said conical surface (518);
   a top element (564) in the form of a disk and constituting the top of the enclosure;
   and fixing means (580) such as bolts passing through the above-mentioned elements in order to hold them together in sealed manner.

16. Apparatus according to claim 5, characterized in that the chamber (602) for receiving the primary volume of fluid is delimited between an internal conical surface (618) and a wall (666) in the form of a surface of revolution having a convex curved profile, and connected directly to the admission orifice (603) and to the evacuation orifices (606), said chamber having a cross-section of substantially constant area, equal to that of the admission orifice.

## Patentansprüche

1. Verfahren zum Verteilen eines Primärvolumens eines Fluidums in eine Anzahl bestimmter Sekundärvolumina, welche zueinander ein vorbestimmtes Verhältnis haben, wobei ein Primärvolumen eines Fluidums einem Gehäuse (1, 101, 201, 301, 401, 501, 601) zugeführt wird, welches Auslaßöffnungen (6, 106, 206, 306, 406, 506, 606) für Fluidum in einer Anzahl, entsprechend der Anzahl von erwünschten Sekundärvolumina aufweist, und dadurch gekennzeichnet ist, daß die Auslaßöffnungen in einer horizontalen Oberfläche des Gehäuses ausgebildet sind, diese horizontale Oberfläche eine Fläche besitzt, die etwa gleich groß wie die Summe der Flächen der Auslaßöffnungen ist, und das Verfahren im selektivem, für alle Öffnungen gleichzeitigem Sperren und Erlauben des Abflusses des Fluidums und im Sicherstellen einer gleichmäßigen Verteilung des Fluidums durch die Auslaßöffnungen besteht, zunächst durch Bildung einer freien Oberfläche des Fluidums parallel zur genannten die Auslaßöffnungen enthaltenden Oberfläche des Gehäuses und danach durch gleichzeitiges Teilen dieser freien Oberflächen durch die Auslaßöffnungen.

2. Verfahren nach Anspruch 1, dadurch gekennzeichnet, daß es das vollständige Abfließen des aufzuteilenden Fluidums durch Zuführen eines Antriebsfluidums, welches mit dem aufzuteilenden Fluidum nicht mischbar ist, gewährleistet.

3. Verfahren nach Anspruch 1 oder 2, dadurch gekennzeichnet, daß die Fläche der freien Oberfläche des Fluidums mittels einer Führungsoberfläche (18, 118, 218, 318, 418, 518, 618) verringert wird, welche am Gehäuse in der Nähe der Auslaßöffnungen angeordnet ist.

4. Verfahren nach einem der vorgehenden Ansprüche, dadurch gekennzeichnet, daß selektiv bestimmte Auslaßöffnungen verschlossen werden, um die Anzahl der Sekundärvolumina zu verändern.

5. Vorrichtung zur Aufteilung eines Primärvolumens eines Fluidums in eine bestimmte Anzahl von Sekundärvolumina, welche zueinander ein vorbestimmtes Verhältnis haben, mit einem geschlossenen Gehäuse (1, 101, 201, 301, 401, 501, 601), welches eine Kammer (2, 102, 202, 302, 402, 502, 602) zur Annahme des Primärvolumens von Fluidum begrenzt und eine Einlaßöffnung (3, 103, 203, 303, 403, 503, 603) sowie Auslaßöffnungen (6, 106, 206, 306, 406, 506, 606) für Fluidum, in einer Anzahl entsprechend der erwünschten Sekundärvolumina von Fluidum aufweist, und dadurch gekennzeichnet ist, daß die Auslaßöffnungen an einer horizontalen Fläche der Kammer ausgebildet sind, und eine Gesamtfläche besitzen, in im wesentlichen gleich jener der horizontalen Fläche der Kammer ist, und die Anordnung Mittel (17, 19, 30) aufweist, die das selektive Abfließen von Fluidum durch die Auslaßöffnungen in einer solchen Weise erlauben und sperren können, daß zunächst eine freie Oberfläche von Fluidum gebildet wird, welche parallel zu den Auslaßöffnungen liegt, und sodann nachfolgend eine simultane Aufteilung dieser freien Oberflächen durch die Öffnungen sichergestellt wird.

6. Vorrichtung nach Anspruch 5, dadurch gekennzeichnet, daß die genannten Mittel Ventile (19), Schieber, Rückschlagventile oder dergleichen aufweisen, welche an mit den genannten Auslaßöffnungen verbunden Abflußleitungen (8) angebracht sind.

7. Vorrichung nach Anspruch 5, dadurch gekennzeichnet, daß die genannten Mittel U-förmige Rohre (30) aufweisen, welche Abflußleitungen für das Fluidum bilden und mit den genannten Auslaßöffnungen verbunden sind.

8. Vorrichtung nach einem der Ansprüche 5 bis 7, dadurch gekennzeichnet, daß sie Mittel (10, 12, 14) zum Einbringen eines Treibfluidums, welches nicht mit der aufzuteilenden Flüssigkeit mischbar ist, in das Gehäuse aufweist.

9. Vorrichtung nach einem der Ansprüche 5 bis 8, dadurch gekennzeichnet, daß das Gehäuse eine geometrische Oberfläche (18, 118, 218, 318, 418, 518, 618) zur Vorteilung des Fluidums aufweist, welche in der Nähe der Einlaßöffnung beginnt und in der Nähe der Auslaßöffnungen endet.

10. Vorrichtung nach Anspruch 9, dadurch gekennzeichnet, daß ihre vorteilende Oberfläche im wesentlichen konisch ausgeführt ist, wobei ihre Spitze in Richtung der Einlaßöffnung des Fluidums ausgerichtet ist, sodaß ihre Grundfläche den Auslaßöffnungen benachbart ist.

11. Vorrichtung nach Anspruch 9 oder 10, dadurch gekennzeichnet, daß sie ein Mittel (142, 242) zur Schichtbildung aufweist, welches der Einlaßöffnung zugeordnet ist und an der Spitze der Verteilungsoberfläche eine parallele Oberfläche aufweist und in unmittelbarer Nähe derselben angeordnet ist.

12. Vorrichtung nach einem der Ansprüche 5 bis 11, dadurch gekennzeichnet, daß die Auslaßöffnungen, im Boden von die Flüssigkeit einschließenden Hälsen (350, 550) oder Zellen (450), die zum völligen Füllen mit aufzuteilendem Fluidum geeignet sind, ausgebildet sind.

13. Vorrichtung nach Anspruch 12, dadurch gekennzeichnet, daß die genannten Hälse und/oder Zellen in Richtung der Auslaßöffnungen einen abnehmenden Querschnitt aufweisen.

14. Vorrichtung nach einem der Ansprüche 5 bis 13, dadurch gekennzeichnet, daß sie eine in die genannte Kammer mündende Lüftungsöffnung (28, 528) und Mittel (29) zum Verschließen dieser Öffnung aufweist.

15. Vorrichtung nach einem der Ansprüche 5 bis 14, dadurch gekennzeichnet, daß das Gehäuse (501) geformt ist durch:
   - ein scheibenförmiges Element (560), welches den Boden des Gehäuses bildet, und an welchem ein Element (520) mit konischer Oberfläche zum Abfließen des Fluidums angebracht ist,
   - ein Ring (562), der die Wand des Gehäuses bildet, und eine innere kegelstumpfartige Oberfläche aufweist, welche mit der vorhin angeführten konischen Oberfläche (518) ein abgeschlossenes Volumen (550) einschließt,
   - ein scheibenförmiges oberes Element (564), welches die Spitze des Gehäuses formt,
   - und Befestigungsmittel (580), wie Schrauben, die durch vorhin erwähnte Elemente hindurchgehen, um sie dicht zusammenzufügen.

16. Vorrichtung nach Anspruch 5, dadurch gekennzeichnet, daß die Kammer (602) zum Aufnehmen des Primärvolumens des Fluidums von einer inneren konischen Oberfläche (618) und einer rotationssymmetrisch, konvex gebogenen Wand begrenzt ist, und direkt mit der Einlaßöffnung (603) und den Auslaßöffnungen (606) verbunden ist, und daß diese Kammer einen Querschnitt mit einer im wesentlichen konstanten Fläche aufweist, der jenem der Einlaßzellöffnung gleich ist.

Fig-1

Fig-2

Fig-3

Fig.4

Fig.5

Fig.6

Fig-7

Fig. 8